# EUROPEAN PATENT SPECIFICATION

(11) **EP 3 798 520 B1**
(45) Date of publication and mention of the grant of the patent: **22.11.2023**
(21) Application number: 20190650.0
(22) Date of filing: 12.08.2020
(51) Int. Cl.: F24D 3/08, F24D 19/10, F24D 10/00

(54) **ELECTRONICALLY CONTROLLED BY-PASS**
ELEKTRONISCH GESTEUERTER BYPASS
DÉRIVATION À COMMANDE ÉLECTRONIQUE

(30) Priority: 30.09.2019 DK PA201901129
(43) Date of publication of application: 31.03.2021
(73) Proprietor: Danfoss A/S, 6430 Nordborg (DK)
(72) Inventor: CHRISTENSEN, Svend Jørgen Kjærulff, 6430 Nordborg (DK); SAND, Daniel, 6430 Nordborg (DK)
(74) Representative: Stevens, Brian

(56) References cited:
- DE-U1-202018 001 101
- US-A- 3 426 971
- US-A1- 2015 204 550
- US-A1- 2018 314 275
- US-A1- 2018 372 343

## Description

### BACKGROUND

Heating systems comes in a vide different forms, but typically comprises a heating supply such as a district heating plant, a solar heating plant etc., connecting a number of heat exchanging devices (for domestic water heating, radiators, floor heating systems etc.) through branch supply lines connected to a main supply line. The heating system could be direct, where the heating fluid supplied is circulated to the heat exchangers or could be indirect where an intermediate heat exchanger is positioned between the heating supply and the main supply line.

In a publication, US2018/314275, a heating and hot water supply apparatus is disclosed which includes a heating circulation path configured to circulate a heated heating medium with a heating terminal, and a bypass path branched from the heating circulation path for causing the heating medium to flow therethrough without passing through the heating terminal. A hot water supply heat exchanger is disposed in the bypass path.

Another publication, US3426971, shows a hot water heating apparatus having supply and return lines between a water heater and a heat utilization element and a bypass across said lines and through a heat exchanger for a domestic water heating system from a cold water supply and with a priority change-over valve means connected between said heater and said element and connected to said bypass to selectively control the flow from the supply line to said element or to said exchanger.

The publication DE202018001101 discloses a heating satellite unit or interface unit for centralised heating or for remote heating of the type comprising a first delivery conduit connected to a system for heating an environment, a first return conduit from the said heating system, a second delivery conduit connected to a domestic hot water system, a second return conduit from the said domestic hot water system.

There is however a difference in the needs for the different heat exchanging devices. Where radiators, floor heating systems etc. often are shut off during warm seasons, tapping's of domestic water however requires warm water throughout the year. Shutting of the heating fluid from the domestic heating when there are no tapping results in a cooling of the fluids in the main supply and branch supply lines. This makes it substantially slow for the tapped water to heat to the desired temperature.

### SUMMARY OF THE INVENTION

The problem is solved by a heating system according to claim 1, and a method to control a heating system according to claim 8.

The heating system may comprise at least one temperature sensor positioned to measure the temperature, T, of the heating fluid at a position in said heating system, said measured temperature T being communicated to the controller, where said re-heating procedure is or includes a temperature re-heating procedure where the control valve is opened when the temperature T gets below a minimum threshold Tₘᵢₙ and kept open until the measured temperature T reaches a maximum threshold Tₘₐₓ and is then shut off/ closed again. In this embodiment the given condition and time period is thus defined by the measured temperature T.

In an embodiment is the temperature sensor positioned in connection with the main supply line.

The by-pass line in the invention connects the main supply line and the main return line.

The temperature minimum threshold Tₘᵢₙ and/or maximum threshold Tₘₐₓ in an embodiment depends on the ambient temperature(s) such as where the temperature sensor is/are positioned and/or the outdoor temperatures, the temperature of the supply heating fluid and any combination thereof. In this embodiment the given condition and optionally time period is thus defined by the measured ambient temperature(s).

The re-heating procedure in an embodiment includes a time dependent re-heating procedure, where the re-heating procedure operate at specific intervals, these possible depending on ambient temperature(s). In this embodiment the given condition and time period is thus pre-defined.

The re-heating procedure in an embodiment includes a maintenance re-heating procedure including the steps of setting the flow control valve at a maintenance position, monitoring the temperature T measured by a temperature sensor over a period if the temperature T drops, then activating a re-heating procedure at some intervals. In this embodiment too, the given condition and time period is thus defined by the measured temperature T.

The re-heating procedure in an embodiment is used to compare heating systems, or different branch line connections including e.g. radiators, floor heating systems etc.

### FIGURES

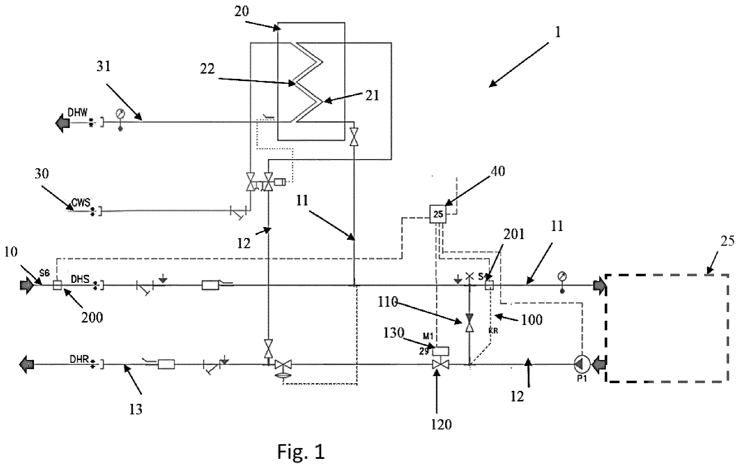

- Fig. 1: Heating system including a by-pass line controlled according to the invention.

### DETAILED DESCRIPTION OF THE INVENTION

It should be understood the detailed description and specific examples, while indicating embodiments of the invention, are given by way of illustration only, since various changes and modifications within the scope of the invention defined by the appended claims will become apparent to those skilled in the art from the detailed description.

Fig. 1 illustrate an example heating system (1) connected to a heating fluid supply, such as a district heating system. Heating fluid is supplied to the hot main supply line (10) in branch supply (11) lines to one or more heat exchanging devices like radiators, floor heating systems etc. (25), and to a domestic water heat exchanger (20) which in the illustrated example shows a first flow path (21) from where heat is transferred from the supplied heating fluid in the first flow path (21) to a cold fluid flowing in a second path (22) supplied (30) from a cold water supply. The heated cold water then is fed (31) to e.g. domestic use like water taps etc.

From the domestic water heat exchanger (20) the cooled heating fluid flows in branch return line (12) to a cold main return line (13).

The main supply line (10) thus is connected to all the branch supply (11) lines and the main return line (13) to all the branch return lines (12).

The heating system (1) according to the invention includes a controller (40) and a control valve (120). It may further include valves, differential pressure controllers, flow sensors, temperature sensors, thermostats, etc.

A by-pass line is connected between main supply (10) and return lines (13).

This enables a flow of heating fluid even when no heating takes place. There is however a difference in the needs for the different heat exchanging devices (20, 25). Where radiators, floor heating systems etc. (25) often is shut off during warm seasons, the domestic tapping (31) however requires warm water throughout the year. Shutting of the heating fluid from the domestic heating when there are no tapping results in a cooling of the fluids in the main supply (10) and branch supply lines (11). This makes it substantially slow for the tapped water to heat to the desired temperature.

Fig. 1 illustrates that according to the invention, the by-pass line (100) connects the main supply (10) and return (13) lines. According to the invention, the by-pass line (100) connects the main supply line (10) upstream to the radiators etc (25) but downstream of the domestic water heat exchanger (20). The by-pass (100) line connects to the main return line (13) downstream of the radiators etc. (25) but upstream of the domestic water heat exchanger (20) branch return line (12).

In the illustrated system a second bypass line including a check valve (110) is positioned to circulate fluid in the radiators, floor heating systems etc (25). In the illustrated embodiment the check valve is positioned such that flow is enabled from the return line (13), or branch return line (12), to the main supply line (10), or branch supply line (11), thus enabling a circulation of return fluid from the radiators etc. (25) back to their branch supply line (11) This therefore is optional

A flow control valve (120) is connected to regulate flow in the heating system (1), which in the illustration is connected to the main return line (13). Alternatively, it could have been connected to the main supply line (10), or even the by-pass line (100).

An actuator (130) adjusts the valve to adjust the set flow rate. The actuator (130) is in data exchange communication with the controller (40), such a digital control signal, or analogue electric signal etc., which can give settings to the actuator (130).

One or more temperature sensors (200, 201) is connected to the heating system (1), such as to the main supply line (10). The illustrated embodiment shows a first temperature sensor (200) positioned upstream of any of the branch supply (11) lines, but upstream of the radiators etc. (25). The temperature sensor(s) (200, 201) too is in data exchange communication with a controller (40).

The illustration shows a heating fluid supplied in the main supply line (10), which could be a direct connection to the district heating network, this fluid then passing directly as heating fluid in the heating system (1). Alternatively, it could be an indirect connection, where a not shown heat exchanger intermediates the district heating network and the heating system (1). In this indirect version a local heating fluid then is circulated being heated in the intermediate heat exchanger.

In any version the temperature sensor (200, 201) could be positioned in the main return line (13). In the indirect connection embodiment, the temperature sensor (200, 201) in addition could be used to limit the temperature of the return fluid in the main return line (13). This could be an all-season operation.

To ensure a low heat loss, but at the same time ensure a minimum temperature in the main supply line (10), the present heating system (1) is adapted to operate such that the flow control valve (120) is controlled in response to a measured temperature, e.g. as measured in the main supply line (10) by a temperature sensor positioned such as the first (200) or second (201) temperature sensor.

In one embodiment to be referred to as a temperature dependent re-heating procedure, the flow control valve (120) is opened when the temperature T measured by the temperature sensor (200, 201) reaches above a defined temperature minimum threshold Tₘᵢₙ. It then is kept open until the measured temperature T reaches a maximum threshold Tₘₐₓ and is then shut off/ closed again. This can be referred to as a re-heating procedure, in this embodiment being a temperature dependent re-heating procedure.

This ensures there is heating fluid in the main supply line (10) at a certain minimum Tₘᵢₙ ensuring sufficiently fast heating of the domestic water to be tapped (31), but at the same time reduces the heat loss as only the required heat is supplied to the heating system (1) to ensure the minimum temperature Tₘᵢₙ.

By positioning the connection of the by-pass (100) on the main supply line (10) upstream of the radiators etc. (25)the accumulated length of the lines (10, 11, 12, 13) to be heated in the re-heating procedure is reduced, since it is expected no additional heat needs to be supplied to the radiators etc. (25), and the lines therefore can be kept cold.

In one embodiment the re-heating procedure is activated in dependence to the seasons, when it is expected there is no room heating requirement from the radiators etc. (25).

In one embodiment the temperature minimum threshold Tₘᵢₙ and/or maximum threshold Tₘₐₓ depend on the ambient temperature(s) (which e.g. could be the temperature where the temperature sensor (200, 201) is positioned and/or the outdoor temperatures), the temperature of the supply heating fluid and any combination thereof.

In one embodiment the re-heating procedure is activated in dependence to a drop in a pressure change (e.g. pressure drop) in the heating fluid. Such a drop often is a result of the ambient temperature(s) being close to - or even higher - than the temperature of the supply heating fluid. In this embodiment the temperature of the supply heating fluid may not be known, but instead the frequency of performing the re-heating process is adjusted. In this embodiment the time period of the re-heating process could be fixed and/or could depend on the ambient temperature(s). Alternatively, the embodiment could include introducing the temperature measurement of a temperature sensor (200, 201) only when the re-heating procedure has been activated, and then stopping it when the measured temperature reaches a maximum threshold Tₘₐₓ.

This embodiment could be referred to as pressure dependent re-heating procedure.

In one embodiment the system changes between temperature dependent re-heating procedure and pressure re-heating procedure in dependence to the ambient temperature(s). If this gets within a defined reach of the temperature of the supply heating fluid the system changes from being operated in temperature dependent heating procedure mode, to pressure dependent heating procedure mode, and back again when ambient temperature(s) gets below a defined reach of the supply heating fluid temperature. In this embodiment the time of the re-heating procedure either would be set or depends e.g. on ambient temperature(s).

In one embodiment the system includes a time dependent re-heating procedure, where the re-heating procedure operate at specific intervals, these possible depending on ambient temperature(s). The re-heating procedures then could run for a fixed period and/or time period depending on ambient temperature(s). Alternatively, the embodiment could include introducing the temperature measurement of a temperature sensor (200, 201) only when the re-heating procedure has been activated, and then stopping it when the measured temperature reaches a maximum threshold Tₘₐₓ.

In an embodiment the heating system (1) include a maintenance re-heating procedure. Here the flow control valve (120) is set at a maintenance position. The temperature T measured by a temperature sensor (200, 201) is then monitored over a period. If it drops, this means the cooling in the branches connecting the heat exchanging devices (20, 25) has been higher than in the main supply line (10) where the temperature sensor (200, 201) is positioned. This means the temperature sensor (200, 201) measures a temperature representative of then cooling in the branches. In this situation a re-heating procedure is activated at some intervals.

The present invention also relates to a method to control a heating system according to claim 8.

In one additional embodiment the re-heating procedure is used to compare heating systems (1), or different branch line (11) connections including e.g. radiators, floor heating systems etc. (25). For example, in housings including a etc. plural of individual flats, optionally each connected to the heating supply, e.g. district heating, through an interconnecting heat exchanger (e.g. in a substation), there may be a mismatch of the heat consumption. One, or a few, of the individual flats may control the maintenance of the heating in the others. By measuring the times for the individual re-heating procedures this can be identified.

In one related embodiment the re-heating procedure is used to compare individual times of re-heating procedures for different branch supply (11) line connections include g e.g. radiators, floor heating systems etc. (25), for example for a plural of expected similar houses or flats, to identify is some are poorly insulated.

## Claims

1. Heating system (1) comprising;
- heat exchange devices (20,25) comprising a domestic water heat exchanger (20) and one or more heat exchanger devices (25) like radiators, floor heating devices etc.,
- branch supply lines (11),
- branch return lines (12),
- a main supply line (10) for feeding a heating fluid to said heat exchanging devices (20, 25) through said branch supply lines (11), and
- one main return line (13) for returning the heating fluid from said heat exchanging devices (20, 25) through said branch return (12) lines,
- a controller (40), and
- a by-pass line (100) and a control valve (120) positioned controlling the flow through said by-pass line (100), said by-pass line (100) connecting said main supply line (10) and said main return line (13), where the by-pass line (100) is connected to the main supply line (10) upstream to the heat exchanger devices (25) like radiators, floor heating devices etc., but downstream of the domestic water heat exchanger (20),
**characterized in that** for periods where no heat is supplied to the heat exchanging devices (20, 25), the controller (40) is adapted to regulate the control valve (120) by a re-heating procedure of the fluid in the main supply line (10) or in one of said branch supply lines (11) where the control valve (120) opens for a time period under a given condition.

2. Heating system (1) according to claim 1 further comprising at least one temperature sensor (200, 201) positioned to measure the temperature, T, of the heating fluid at a position in said heating system (1), said measured temperature T being communicated to said controller (40), where said re-heating procedure is or includes a temperature re-heating procedure where the control valve (120) is opened when the temperature T gets below a minimum threshold Tₘᵢₙ and kept open until the measured temperature T reaches a maximum threshold Tₘₐₓ and is then shut off/ closed again.

3. Heating system (1) according to claim 2, where said temperature sensor (200, 201) is positioned in connection with the main supply line (10).

4. Heating system (1) according to any of claims 2-3, wherein the temperature minimum threshold Tₘᵢₙ and/or maximum threshold Tₘₐₓ depends on the ambient temperature(s) such as where the temperature sensor (200, 201) is positioned and/or the outdoor temperatures, the temperature of the supply heating fluid and any combination thereof.

5. Heating system (1) according to any of the preceding claims, wherein the re-heating procedure includes a time dependent re-heating procedure, where the re-heating procedure operate at specific intervals, these possible depending on ambient temperature(s).

6. Heating system (1) according to any of the preceding claims, wherein the re-heating procedure includes a maintenance re-heating procedure including the steps of setting the flow control valve (120) at a maintenance position, monitoring the temperature T measured by a temperature sensor (200, 201) over a period, if the temperature T drops, then activating a re-heating procedure at some intervals.

7. Heating system (1) according to any of the preceding claims, wherein the re-heating procedure is used to compare heating systems (1), or different branch line (11) connections including e.g. radiators, floor heating systems etc. (25).

8. A method to control a heating system according to any of the previous claims, including the step of controlling the flow in the by-pass line (100).

## Patentansprüche

1. Heizungssystem (1), umfassend:
- Wärmeaustauschvorrichtungen (20, 25), umfassend einen Brauchwasserwärmeaustauscher (20) und eine oder mehrere Wärmeaustauschvorrichtungen (25) wie Heizkörper, Bodenheizungsvorrichtungen etc.,
- Zweigversorgungsleitungen (11),
- Zweigrücklaufleitungen (12),
- eine Hauptversorgungsleitung (10) zum Zuführen einer Heizflüssigkeit zu den Wärmeaustauschvorrichtungen (20, 25) durch die Zweigversorgungsleitungen (11) und
- eine Hauptrücklaufleitung (13) zum Zurückführen der Heizflüssigkeit aus den Wärmeaustauschvorrichtungen (20, 25) durch die Zweigrücklaufleitungen (12),
- eine Steuerung (40) und
- eine Bypassleitung (100) und ein Steuerventil (120), das so positioniert ist, dass es den Durchfluss durch die Bypassleitung (100) steuert, wobei die Bypassleitung (100) die Hauptversorgungsleitung (10) und die Hauptrücklaufleitung (13) verbindet, wobei die Bypassleitung (100) mit der Hauptversorgungsleitung (10) stromaufwärts von den Wärmeaustauschvorrichtungen (25) wie Heizkörpern, Bodenheizungsvorrichtungen etc., jedoch stromabwärts von dem Brauchwasserwärmeaustauscher (20) verbunden ist;
**dadurch gekennzeichnet, dass** die Steuerung (40) für Zeiträume, in denen den Wärmeaustauschvorrichtungen (20, 25) keine Wärme zugeführt wird, dazu ausgelegt ist, das Steuerventil (120) durch eine Neuerhitzungsprozedur der Flüssigkeit in der Hauptversorgungsleitung (10) oder in einer der Zweigversorgungsleitungen (11), wenn sich das Steuerventil (120) eine Zeit lang unter einer jeweiligen Bedingung öffnet, zu regeln.

2. Heizungssystem (1) nach Anspruch 1, ferner umfassend mindestens einen Temperaturfühler (200, 201), der so positioniert ist, dass er die Temperatur, T, der Heizflüssigkeit an einer Position in dem Heizungssystem (1) misst, wobei die gemessene Temperatur T an die Steuerung (40) kommuniziert wird, wobei die Neuerhitzungsprozedur eine Temperaturneuerhitzungsprozedur ist oder enthält, wobei das Steuerventil (120) geöffnet wird, sobald die Temperatur T einen Minimalschwellwert Tₘᵢₙ unterschreitet, und offen gehalten wird, solange bis die gemessene Temperatur T einen Maximalschwellwert Tₘₐₓ erreicht, und dann wieder abgesperrt/geschlossen wird.

3. Heizungssystem (1) nach Anspruch 2, wobei der Temperaturfühler (200, 201) in Verbindung mit der Hauptversorgungsleitung (10) positioniert ist.

4. Heizungssystem (1) nach einem der Ansprüche 2-3, wobei der Temperaturminimalschwellwert Tₘᵢₙ und/oder der Temperaturmaximalschwellwert Tₘₐₓ von der Umgebungstemperatur (den Umgebungstemperaturen), etwa wo der Temperaturfühler (200, 201) positioniert ist und/oder den Außentemperaturen, der Temperatur der Versorgungsheizflüssigkeit und beliebigen Kombinationen davon abhängen/abhängt.

5. Heizungssystem (1) nach einem der vorhergehenden Ansprüche, wobei die Neuerhitzungsprozedur eine zeitabhängige Neuerhitzungsprozedur enthält, wobei die Neuerhitzungsprozedur in bestimmten Intervallen abläuft, wobei diese abhängig von der Umgebungstemperatur (den Umgebungstemperaturen) möglich sind.

6. Heizungssystem (1) nach einem der vorhergehenden Ansprüche, wobei die Neuerhitzungsprozedur eine Wartungsneuerhitzungsprozedur enthält, die die Schritte des Einstellens des Durchflusssteuerventils (120) an einer Wartungsposition, des Überwachens der Temperatur T, die während eines Zeitraums von einem Temperaturfühler (200, 201) gemessen wird, wenn die Temperatur T abfällt, und des anschließenden Aktivierens einer Neuerhitzungsprozedur in einigen Intervallen enthält.

7. Heizungssystem (1) nach einem der vorhergehenden Ansprüche, wobei die Neuerhitzungsprozedur genutzt wird, um Heizungssysteme (1) oder unterschiedliche Verbindungen einer Zweigleitung (11), die z. B. Heizkörper, Bodenheizungssystem (25) etc. enthalten, zu vergleichen.

8. Verfahren zum Steuern eines Heizungssystems nach einem der vorherigen Ansprüche, das den Schritt des Steuerns des Durchflusses in der Bypassleitung (100) enthält.

## Revendications

1. Système (1) de chauffage comportant :
- des dispositifs (20, 25) d'échange de chaleur comportant un échangeur (20) de chaleur d'eau domestique et un ou plusieurs dispositifs (25) d'échange de chaleur comme des radiateurs, des dispositifs de chauffage par le sol, etc.,
- des canalisations secondaires (11) d'alimentation,
- des canalisations secondaires (12) de retour,
- une canalisation principale (10) d'alimentation servant à amener un fluide de chauffage auxdits dispositifs (20, 25) d'échange de chaleur à travers lesdites canalisations secondaires (11) d'alimentation, et
- une canalisation principale (13) de retour servant à ramener le fluide de chauffage à partir desdits dispositifs (20, 25) d'échange de chaleur à travers lesdites canalisations secondaires (12) de retour,
- un moyen (40) de commande, et
- une canalisation (100) de dérivation et une soupape (120) de régulation positionnée de façon à commander l'écoulement à travers ladite canalisation (100) de dérivation, ladite canalisation (100) de dérivation reliant ladite canalisation principale (10) d'alimentation et ladite canalisation principale (13) de retour, la canalisation (100) de dérivation étant reliée à la canalisation principale (10) d'alimentation en amont des dispositifs (25) d'échange de chaleur comme des radiateurs, des dispositifs de chauffage par le sol etc., mais en aval de l'échangeur (20) de chaleur d'eau domestique,
**caractérisé en ce que** pour des périodes où aucune chaleur n'est fournie aux dispositifs (20, 25) d'échange de chaleur, le moyen (40) de commande est prévu pour réguler la soupape (120) de régulation par une procédure de réchauffage du fluide dans la canalisation principale (10) d'alimentation ou dans une desdites canalisations secondaires (11) d'alimentation, la soupape (120) de régulation s'ouvrant pendant un laps de temps dans une condition donnée.

2. Système (1) de chauffage selon la revendication 1, comportant en outre au moins un capteur (200, 201) de température positionné pour mesurer la température, T, du fluide de chauffage au niveau d'une position dans ledit système (1) de chauffage, ladite température mesurée T étant communiquée audit moyen (40) de commande, ladite procédure de réchauffage étant ou comprenant une procédure de réchauffage en température, la soupape (120) de régulation étant ouverte lorsque la température T passe en-dessous d'un seuil minimum Tₘᵢₙ et maintenue ouverte jusqu'à ce que la température mesurée T atteigne un seuil maximum Tₘₐₓ et étant ensuite à nouveau isolée/fermée.

3. Système (1) de chauffage selon la revendication 2, ledit capteur (200, 201) de température étant positionné en liaison avec la canalisation principale (10) d'alimentation.

4. Système (1) de chauffage selon l'une quelconque des revendications 2 à 3, le seuil minimum Tₘᵢₙ et/ou le seuil maximum Tₘₐₓ de température dépendant de la ou des températures ambiantes telles que là où le capteur (200, 201) de température est positionné et/ou des températures d'extérieur, de la température du fluide de chauffage d'alimentation et d'une combinaison quelconque de celles-ci.

5. Système (1) de chauffage selon l'une quelconque des revendications précédentes, la procédure de réchauffage comprenant une procédure de réchauffage dépendant du temps, la procédure de réchauffage fonctionnant à des intervalles spécifiques, ceux-ci dépendant éventuellement de la ou des températures ambiantes.

6. Système (1) de chauffage selon l'une quelconque des revendications précédentes, la procédure de réchauffage comprenant une procédure de réchauffage d'entretien comprenant les étapes consistant à régler la soupape (120) de régulation de débit à une position d'entretien, à surveiller la température T mesurée par un capteur (200, 201) de température sur une période, puis à activer, si la température T chute, une procédure de réchauffage à certains intervalles.

7. Système (1) de chauffage selon l'une quelconque des revendications précédentes, la procédure de réchauffage étant utilisée pour comparer des systèmes (1) de chauffage, ou différents raccordements de canalisations secondaires (11) y compris p.ex. des radiateurs, des systèmes de chauffage par le sol, etc. (25) .

8. Procédé de commande d'un système de chauffage selon l'une quelconque des revendications précédentes, comprenant l'étape consistant à réguler le débit dans la canalisation (100) de dérivation.
